# EUROPEAN PATENT SPECIFICATION

(11) **EP 0 623 288 B1**
(45) Date of publication and mention of the grant of the patent: **02.12.1998**
(21) Application number: 94201208.9
(22) Date of filing: 02.05.1994
(51) Int. Cl.: A23N 17/00, A21D 17/00, B03B 9/06, B65B 69/00

(54) **Installation for the use of outdated or spoiled foodstuffs of human consumption for animal consumption**
Anlage zum Gebrauch von überalterten oder verunreinigten für den menschlichen Verzehr vorgesehenen Nahrungsmittel als Tierfutter
Installation pour permettre l'emploi d'aliment périmés ou avariés destinés à l'alimentation humaine pour la consommation animale

(30) Priority: 04.05.1993 ES 9300942
(43) Date of publication of application: 09.11.1994
(73) Proprietor: OLISEFI S.A., 43897 Campredo-Tortosa (Tarragona) (ES)
(72) Inventor: Montserrat Bonfill, José, ES-43500 Tortosa (Tarragona) (ES)
(74) Representative: Ungria Lopez, Javier

(56) References cited:
- EP-A- 0 386 694
- DE-A- 3 823 271
- FR-A- 2 123 531
- GB-A- 2 106 774
- US-A- 3 834 630
- US-A- 4 896 836

## Description

The present invention refers to an installation for the use for animal consumption of outdated or spoiled foodstuffs intended for human consumption , having a series of relevant and advantageous features over those presently used for the same purpose.

Presently there is a large variety of foodstuffs for human consumption that have to be thrown away as their expiration date has gone by, or because they have become spoiled and thus they are not a marketable product. A product that has been discarded in the manufacturing process because it has not passed the quality controls may also be considered.

The invention is applicable to all types of solid foodstuffs (such as for example, sugar, cereals, legumes, flours and derivatives thereof, dairy products, chocolates, baby food, dietetic foods, sweets, dried fruits, etc.) that are packaged in paper, cardboard, PVC, plastic, etc. For example, in a box of madeleines we can see that each one of them is packaged individually in a type of paper cup, and that a plurality of madeleines thus packaged are contained in a plastic tray; a series of trays is contained in a cardboard box which in turn is sealed and labeled.

A box of madeleines whose expiration date has gone by is no longer apt for human consumption. However, it is apt for animal consumption, but for such a purpose it is necessary to separate the edible material from that which is not edible, in this case, all the containers and wrappings that go with the edible product. Since the product is practically a waste, it is not profitable to separate the edible product by hand. For the purpose of doing so the present invention provides an installation for a mechanical process which is rapid and industrializable.

DE-A-3823271 describes a process and an installation to recover outdated pastry goods in pastry in granular form. Different materials of the wrappers are differentiated so clearly according to the shape and content, that most of these materials can be separated by suction. If magnetic iron alloys are contained, these alloys are separated by known magnetic separation means, in such a way that once the different parts of the wrapper are separated by suction the material to be recovered is converted into a flat layer that is controlled in the selection machine. This raw material is crumbled and then subjected to drying and cooling Depending on the need of having a bacteria-free grain, in other words, top quality grain, and on the possibility of manufacturing lower quality grain, a soaking area is installed between the selection machine and the dryer whose second outlet is connected to another dryer. Above the same is a cooling area and a third selection machine whose outlet serves to combine the selected particles in a second warehouse. In this way another dryer, for example a drum dryer, may be used for lower quality grain which passes to a cyclone wherein a heat supply at a temperature of about 70º is used. The dry grain is cooled in a refrigerator at about 40º and the grain is selected once again with a smaller grain size. Therefore, there are some separated particles that have a high value of impurities in the grain of the bacteriologically free pastry, that is taken directly to a silo.

US-A- 3834630 discloses an installation comprising the features defined in the preamble of claim 1 of the instant patent. US-A-3834630 claims an apparatus for opening containers and a method for recovering the contents of packages of paper and other degradable materials, whereby the packaging material is knocked and ground in an area or separation vessel and the contents thereof are made to pass through some holes provided in said area or separation vessel, while the packaging material is thrown out through a outlet by means of an air current created inside the separation area. The cutting means include elements projecting out mounted in such a way that they turn around a shaft of the container and elements projecting in, preferably fixed ones, that mesh with the elements projecting out, so that upon turning the packaged material will be torn and knocked. The cutting means that project out are curved sideways near the outlet end to form a propeller blade that defines the means for forming the air current.

In said patent of invention, US-A-3834630, a method for recovering the contents of these containers is described, wherein the containers are knocked inside the separation area that has a bottom portion with openings of a size that permits the passing through of the contents; the containers are knocked to grind the packaging material and thus separate the material of the contents thereof; the contents passing through the openings placed in a bottom portion of the container, air current blowing through the outlet of the separation area to transport the packaged material towards the outlet. These air currents are formed from the inside of the separation area in the outlet end, forming the air current simultaneously with the knocks and the grinding of the packaging material.

The prior art search conducted by the European Patent Office, revealed both cited patents. In said prior art search, US-A-4896836, GB-A-2106774 and EP-A-0386694 were also cited.

In these latter cited patents of invention, the structure as well as the functionality of the invention differ greatly from the advantageous characteristics that the present invention proposed.

In general terms, the installation as claimed includes a hopper receiving the products to be recycled, poured into it in bulk. By means of a driving system with a speed variator, the rotation of an Archimedean screw lifts the product deposited in the hopper up to a hammer mill or the like, in order to be ground.

The crumbled product is led by means of a second Archimedean screw towards a trommel, or rotating separator, useable matter falling previously by gravity through a screen. This screen is arranged in the end section of a covering tube of the second helicoidal screw or Archimedean screw, and materialized by a plurality of holes existing in a fixed or independent plate and exchangeable to change the diameter of the holes, the latter area of the Archimedean screw defining a vomitory for the useable product.

The unuseable material, and that includes some remains of useable material, after the passing thereof through the trommel, is diverted by an absorption device in order to be packed. The absorption device include a constant or variable speed ventilator-collector.

Between the end section of the Archimedean screw and the grinding mill there is a series of fixed magnets, that produce the separation of metallic material, such as staples, nails or the like, that accompany the warpper or container.

The final result is a flour that can be complementarily treated in conventional drying, milling install ations, etc. again and even packaged. It can be used in animal food in an absolutely advantageous manner in comparison with other types of materials to be used as feed, due to the raw materials present in the manufacturing of said flour, as well as due to the absolutely consumable form in which it comes. The separating trommel turns and due to the orientation of the blades placed in the drum thereof, following a helicoidal direction, the waste product (paper, plastic, cardboard, etc.) advances towards the bottom outlet mouth existing in the base or fixed cover opposite the inlet one.

The ventilator-collector absorbs the waste matter that reaches the outlet mouth of the trommel, through a connection tube whose aspirating nozzle is moveable so that it can approach or move away depending on the characteristics of the product to be treated, such as: nature, density, degree of moisture, etc.

The grating of the trommel drum discharges the rest of the use able material that could have remained trapped between the paper and similar waste products, while the rest is drawn in towards the vessel or collecting cage (wrapper container.)

If any compact remainder does not pass through the grid of the trommel, upon not being drawn in by the ventilator-collector either, it drops by gravity to the base of a third Archimedean screw that returns it again to the mill.

The discharge ends of the helicoidal or Archimedean screws are provided with a radial blade that forces the product that is transported, to drop towards the mill or advance towards the trommel, avoiding possible jamming.

In order to provide a better understanding of the features of the invention and forming an integral part of this specification, attached hereto is a page of drawings, in whose figures the following has been represented in an illustrative and non-restrictive manner.

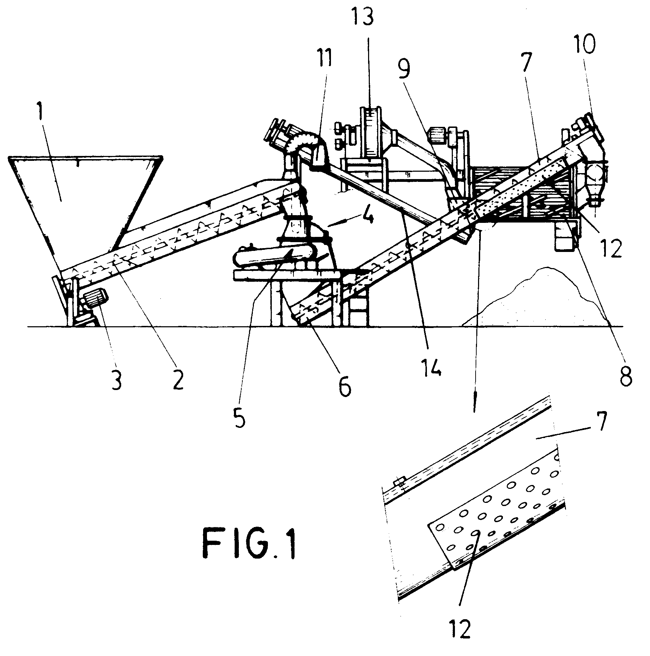

Figure 1 is a rasied schematic view of the installation of the invention.

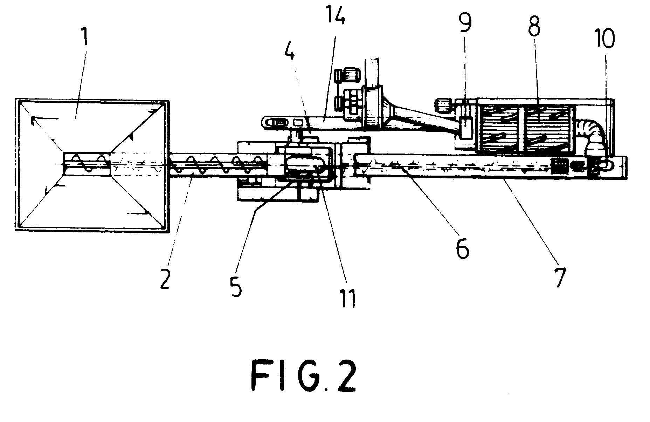

Figure 2 is a plan view of that which has been shown in figure 1.

Making reference to the numbering used in the figures, we can see how the installation that the invention proposes, manages to separate edible material from the wrapper or packaging material made out of cardboard, plastic or the like.

The hopper (1) receives the raw material to be treated, in the same state that it is in. By means of the helicoidal screw (2), operated by the speed variator (3) , the raw material is lifted up to the hammer mill (4), or the like, so that the product is ground.

Inside the grinding mill itself, there are some magnets (5) to produce the separation of any ferric or metallic material, such as staples, nails, etc. normal in packaging.

The ground raw material passes through some grids placed in the base of the hammer mill and they may have measurements variable in terms of the product that is being processes. These grids are rugged and are preferably made out of orthogonally welded rods and they collaborate in destroying the product.

By means of a second helicoidal screw, or an Archimedian screw (6), the ground product is lifted in such a way that in approximately the final third of the run through the inside of the covering tube (7) that complements the Archimedean screw (6), this product undergoes a first separation of the useable material (in the form of flour), from the unuseable material. The useable material or edible material, falls by gravity upon passing through the perforated bottom that the covering tube (7) has in this top area. The edible material is collected directly for the subsequent processing thereof.

The material that cannot be used as food and that still has remains of useable material, passes to a trommel (8), where the separation continues until the inedible material is removed through an absorption device (9), towards the outside part of the unit, where it will be packaged for the possible recycling thereof for other industrial uses.

Reference (10) designates the speed variator that moves the second Archimedean screw (6.)

In the top part of the grinding mill (4), we can see a removal duct for the ground edible product, which is recovered in a bag (11). Irrespective of the type of product, dust may or may not be formed that may be collected in said bag (11), also ending up those metallic elements or very dense elements that are thrown by the hammer mill that turns at a high speed and that have not been retained by the magnets existing therein.

In the final section of the covering tube (7) of the second helicoidal screw (6), specifically where the screening or sieving of the edible material takes place, there are advantageously interchangeable screens (12), the dimensions of the holes selected depending on the product to be processed.

A final sifting or sieving takes place in the trommel (8) before the matter unuseable as food is thrown out through the absorption device (9). Reference (13) designates specifically the ventilator-extractor of non-recoverable material, being aided by a variable speed motor so that the suction strength can be adjusted, as indicated above.

At the outlet of the trommel (8) if any residue is very dense, even metallic and thus not collected by the suction system (9), the same will fall by gravity to the base of the third Archimedean screw (14) that returns it to the mill (4), until it is finally ground or captured by the magnets (5).

## Claims

1. Installation for recycling, for animal consumption, outdated or spoiled food products intended for human consumption, said installation including:
- a hopper (1) for receiving the product to be recycled;
- a first helicoidal screw (2) inside a covering frame for transporting the product from said hopper (1) to a grinding device (4) of the product, said grinding device being provided with grids placed at its base, arranged such that the ground product passes through said grids; characterized in that the installation further comprises:
- a second helicoidal screw (6) for collecting the product coming from said grinding device (4) and for transporting it towards a separating device (8);
- a covering tube (7) of said second helicoidal screw (6), said covering tube having in its end section a screen (12) comprising a plurality of perforations for separating useable foodstuff, said screen (12) being arranged such that useable foodstuff will fall by gravity from said perforations, the installation being arranged for passing the remaining product to said separating device (8), said separating device including means for carrying out a final sieving or sifting and means for throwing out inedible material after said final sieving or sifting.

2. Installation according to claim 1, wherein the grinding device (4) includes a magnetic device (5), for separating ferric or metallic material present in the raw material.

3. Installation according to claim 1, wherein the grinding device (4) comprises in its top part a removal duct with a bag (11) for recovering the product in powder form and other unusable pieces thrown out by the grinding device (4).

4. Installation according to claim 1, wherein said grinding device (4) is a hammer mill.

5. Installation according to claim 1, wherein said separating device (8) comprises a variable speed trommel.

6. Installation according to claim 1, wherein the means for throwing out inedible material include a variable power absorption device (9).

7. Installation according to claim 1, further including means for introducing the inedible material that is thrown out into a packaging vessel which is provided for receiving said material.

8. Installation according to claim 5, further including means for returning foreign bodies or compact material that does not pass through the grid of the trommel (8) and that is not absorbed by the ventilator-collector (13) to the grinding device (4), by means of a third helicoidal screw (14).

9. Installation according to claim 1, wherein the discharge ends of the helicoidal screws (2,6) have a radial blade that pushes the raw material avoiding jamming.

10. Installation according to the preceding claims, wherein the helicoidal screws (2,6,14), as well as the drum of the trommel (8) and the ventilator-collector (13) of the absorption device (9) turn by means of variable speed motors.

11. Installation according to any of he preceding claims, wherein the end section of the covering tube (7) includes an interchangeable screen (12), allowing the size of the perforations to be adapted to the product being processed.

12. Installation according to any of the preceding claims, wherein the grids of the grinding device comprise orthogonally welded rods.

## Patentansprüche

1. Einrichtung zum Rückgewinnen von abgelaufenen oder verdorbenen zur menschlichen Ernährung bestimmten Nahrungsmitteln zum Verbrauch durch Tiere, welche Einrichtung enthält:
ein Silo (1) zum Aufnehmen des zurückzugewinnenden Produktes;
eine erste Schneckenschraube (2) innerhalb eines Abdeckrahmens zum Transportieren des Produktes von dem Silo (1) zu einem Zerkleinerungsgerät (4) für das Produkt, welches Zerkleinerungsgerät, das mit an seinem Grundteil angesetzten Gittern versehen ist, so angeordnet ist, dass das zerkleinerte Produkt durch die Gitter hindurchtritt;
**dadurch gekennzeichnet**, dass die Einrichtung weiter umfaßt:
eine zweite Schneckenschraube (6) zum Sammeln des aus dem Zerkleinerungsgerät (4) herauskommenden Produktes und zum Transportieren desselben zu einem Trenngerät (8);
ein Abdeckrohr (7) für die zweite Schneckenschraube (6), welches Abdeckrohr an seinem Endabschnitt ein Sieb (12) besitzt, das eine Vielzahl von Durchbrüchen zum Abtrennen nutzbaren Nahrungsmittelmaterials umfaßt, wobei das Sieb (12) so angeordnet ist, dass nutzbares Nahrungsmittelmaterial durch sein Gewicht aus den Durchbrüchen herausfällt, und die Einrichtung angeordnet ist, um das restliche Produkt zu dem Trenngerät (8) weiterzuführen, welches Trenngerät Mittel zum Ausführen einer Abschlußsiebung oder -Sichtung und Mittel zum Auswerfen nicht eßbaren Materials nach der Abschlußsiebung oder -Sichtung enthält.

2. Einrichtung nach Anspruch 1, bei der das Zerkleinerungsgerät (4) ein Magnetgerät (5) zum Abtrennen von in dem Rohmaterial vorhandenem ferritischen oder metallischen Material enthält.

3. Einrichtung nach Anspruch 1, bei der das Zerkleinerungsgerät (4) in seinem oberen Teil eine Abgangsleitung mit einem Sack (11) zum Wiedergewinnen des Produktes in Pulverform und anderer unbrauchbarer durch das Zerkleinerungsgerät (4) ausgeworfene Stücke umfaßt.

4. Einrichtung nach Anspruch 1, bei der das Zerkleinerungsgerät (4) ein Hammerbrecher ist.

5. Einrichtung nach Anspruch 1, bei der das Trenngerät (8) eine mit variabler Drehzahl umlaufende Trommel umfaßt.

6. Einrichtung nach Anspruch 1, bei der das Mittel zum Auswerfen von nicht eßbarem Material ein variable Leistung absorbierendes Gerät (9) enthält.

7. Einrichtung nach Anspruch 1, die weiter Mittel zum Einführen des nicht eßbaren Materials enthält, das in ein zur Aufnahme dieses Materials vorgesehenes Verpackungsgefäß ausgeworfen wird.

8. Einrichtung nach Anspruch 5, die weiter Mittel zum Zurückführen von Fremdkörper- oder kompaktem Material enthält, das nicht durch das Gitter der Trommel (8) hindurchtritt und das nicht durch den Lüftersammler (13) zu dem Zerkleinerungsgerät (4) absorbiert wird, mittels einer dritten Schneckenschraube (14).

9. Einrichtung nach Anspruch 1, bei der die Auslass-Enden der Schneckenschrauben (2, 6) radiale Klingen besitzen, welche das Rohmaterial weiterstoßen, um eine Staubildung zu vermeiden.

10. Einrichtung nach den vorangehenden Ansprüchen, bei der die Schneckenschrauben (2, 6, 14) wie auch das Gefäß der Trommel (8) und der Lüftersammler (13) des Absorptionsgerätes (9) sich mittels Motoren mit variabler Drehzahl drehen.

11. Einrichtung nach einem der vorangehenden Ansprüche, bei der der Endabschnitt des Abdeckrohres (7) ein Wechselsieb (12) enthält, wodurch die Größe der Perforation dem zu verarbeitenden Produkt angepaßt werden kann.

12. Einrichtung nach einem der vorangehenden Ansprüche, bei der das Gitter des Zerkleinerungsgerätes aufeinander senkrecht stehende, miteinander verschweißte Stäbe umfaßt.

## Revendications

1. Installation destinée au recyclage, pour la consommation animale, de denrées alimentaires périmées ou avariées prévues pour la consommation humaine, ladite installation comprenant :
- une trémie (1) destinée à recevoir le produit devant être recyclé,
- une première vis hélicoïdale (2) à l'intérieur d'un bâti de protection destinée à transporter le produit depuis ladite trémie (1) jusqu'à un dispositif de broyage (4) du produit, ledit dispositif de broyage étant muni de grilles placées au niveau de sa base, agencées de telle sorte que le produit broyé passe au travers desdites grilles,
caractérisée en ce que l'installation comprend en outre :
- une seconde vis hélicoïdale (6) destinée à recueillir le produit provenant dudit dispositif de broyage (4) et à le transporter en direction d'un dispositif de séparation (8),
- un tube de protection (7) de ladite seconde vis hélicoïdale (6), ledit tube de protection comportant dans sa section d'extrémité un tamis (12) comprenant une pluralité de perforations destinées à séparer les denrées alimentaires utilisables, ledit tamis (12) étant agencé de telle manière que les denrées alimentaires utilisables tomberont par gravité à partir desdites perforations, l'installation étant agencée de façon à faire passer le produit restant vers ledit dispositif de séparation (8), ledit dispositif de séparation comprenant un moyen destiné à exécuter un tamisage ou un criblage final et un moyen destiné à rejeter les matières non comestibles après ledit tamisage ou criblage final.

2. Installation selon la revendication 1, dans laquelle le dispositif de broyage (4) comprend un dispositif magnétique (5) destiné à séparer les matières ferreuses ou métalliques présentes dans les matières brutes.

3. Installation selon la revendication 1, dans laquelle le dispositif de broyage (4) comprend à sa partie supérieure une conduite d'évacuation comportant un sac (11) destiné à récupérer le produit sous forme de poudre et d'autres éléments inutilisables rejetés par le dispositif de broyage (4).

4. Installation selon la revendication 1, dans laquelle ledit dispositif de broyage (4) est un broyeur à marteaux.

5. Installation selon la revendication 1, dans laquelle ledit dispositif de séparation (8) comprend un crible à tambour à vitesse variable.

6. Installation selon la revendication 1, dans laquelle le moyen destiné à rejeter les matières non comestibles comprend un dispositif d'absorption à puissance variable (9).

7. Installation selon la revendication 1, comprenant en outre un moyen destiné à introduire les matières non comestibles qui sont rejetées dans un récipient de conditionnement qui est prévu pour recevoir lesdites matières.

8. Installation selon la revendication 5, comprenant en outre un moyen destiné à renvoyer des corps étrangers ou des matières compactes qui ne passent pas au travers de la grille du crible à tambour (8) et qui ne sont pas absorbées par le ventilateur-collecteur (13) vers le dispositif de broyage (4), au moyen d'une troisième vis hélicoïdale (14).

9. Installation selon la revendication 1, dans laquelle les extrémités de décharge des vis hélicoïdales (2, 6) comportent une lame radiale qui pousse les matières brutes en évitant un bourrage.

10. Installation selon les revendications précédentes, dans laquelle les vis hélicoïdales (2, 6, 14), de même que le tambour du crible à tambour (8) et le ventilateur-collecteur (13) du dispositif d'absorption (9) tournent au moyen de moteurs à vitesse variable.

11. Installation selon l'une quelconque des revendications précédentes, dans laquelle la section d'extrémité du tube de protection (7) comprend un tamis interchangeable (12), permettant que le calibre des perforations soit adapté au produit qui est traité.

12. Installation selon l'une quelconque des revendications précédentes, dans laquelle les grilles du dispositif de broyage comprennent des barreaux soudés de façon orthogonale.
